# EUROPÄISCHE PATENTANMELDUNG

(11) **EP 0 774 281 A1**
(43) Veröffentlichungstag der Anmeldung: **21.05.1997**
(21) Anmeldenummer: 96118143.5
(22) Anmeldetag: 13.11.1996
(51) Int. Cl.: A63C 5/12, B29C 70/44

(54) **Verfahren zur Herstellung eines Formteils**

(30) Priorität: 15.11.1995 AT 1866/95
(71) Anmelder: KÄSTLE AKTIENGESELLSCHAFT, A-6845 Hohenems (AT)
(72) Erfinder: Danz, Wolfgang, 98597 Fambach (DE); Nachbaur, Rainer, 6833 Faxern (AT)
(74) Vertreter: Torggler, Paul, Dr.

(57) **Zusammenfassung**

Verfahren zur Herstellung eines Formteils mit mindestens einem Hohlkörper aus faserverstärktem Kunststoff, insbesondere eines Skis oder von Skibauteilen, wobei mindestens eine mit kunstharzgetränktem Faserstoff umhüllte, verformbare Hohlkammer (6,7) in einer geschlossenen Form (2,10) durch inneren Gasdruck geformt wird. Zur Erzeugung des inneren Gasdruckes wird in das Innere der verformbaren Hohlkammer (6,7) eine das Innere der Hohlkammer nur teilweise füllende Menge Flüssigkeit eingeführt, worauf nach gasdichtem Abschluß der Hohlkammer (6,7) die Flüssigkei t über ihren Siedepunkt erwärmt wird.

## Beschreibung

Die Erfindung bezieht sich auf ein Verfahren zur Herstellung eines Formteils mit mindestens einem Hohlkörper aus faserverstärktem Kunststoff, insbesondere eines Skis oder von Skibauteilen, wobei mindestens eine mit kunstharzgetränktem Faserstoff umhüllte, verformbare Hohlkammer in einer geschlossenen Form durch inneren Gasdruck geformt wird.

Bei bekannten Vorschlägen zur Durchführung dieses Verfahrens im Skibau werden Schläuche aus Kunststoff, mit kunstharzgetränktem Faserstoff umhüllt, zusammen mit weiteren Schichten und Bauteilen des Skis in eine verschließbare Form eingelegt und die Schläuche über ein Ventil an eine Druckluftzufuhr angeschlossen, worauf nach dem Schließen der Form das Innere der Schläuche mit Druckluft (Preßluft) beaufschlagt wird. Gleichzeitig erfolgt in der Form auch das Aushärten des Kunstharzes.

Es hat sich gezeigt, daß in der praktischen Durchführung solcher Verfahren Probleme mit der Preßluftzufuhr auftreten, beispielsweise was die Dichtheit im Bereich der Luftanschlüsse, die Gleichmäßigkeit des Aufblasens von mehreren nebeneinanderliegenden Schläuchen und die Sichtbarkeit der Anschlußkanülen beim fertigen Ski betrifft.

Aufgabe der Erfindung ist es, eine Weiterentwicklung des eingangs genannten Verfahrens zu schaffen, durch das insbesondere die angeführten Nachteile beseitigt werden können.

Dies wird erfindungsgemäß dadurch erreicht, daß zur Erzeugung des inneren Gasdruckes in das Innere der verformbaren Hohlkammer eine das Innere der Hohlkammer nur teilweise füllende Menge Flüssigkeit eingeführt wird, worauf nach gasdichtem Abschluß der Hohlkammer die Flüssigkeit über ihren Siedepunkt erwärmt wird.

Durch die Erwärmung über ihren Siedepunkt wird die eingeführte Flüssigkeit in die Gasphase übergeführt und erzeugt im Inneren der Hohlkammer einen Gasdruck, der durch weitere Erwärmung über den Siedepunkt hinaus gesteigert werden kann.

Bevorzugt werden Flüssigkeiten verwendet, deren Siedepunkt unter 100°C liegt, z.B. Ethanol (78°), Ethylacetat (77°), Hexan (68,7°), Aceton (56,5°), Pentan (36°) oder Mischungen solcher Flüssigkeiten.

Weil gleichzeitig mit dem Formen der Hohlkammer durch inneren Gasdruck auch ein Aushärten des Kunstharzes der faserverstärkten Kunstharzumhüllung der Hohlkammer erfolgen soll, wird man jedenfalls eine Flüssigkeit wählen, deren Siedepunkt unter der Aushärtetemperatur des Kunstharzes liegt. Da die Aushärtetemperatur z.B. von Epoxidharz etwa 120°C beträgt, eignen sich die vorstehend als Beispiele angegebenen Flüssigkeiten zur Formgebung von mit epoxidharzgetränktem Faserstoff umhüllten Hohlkammern.

Die Steuerung des Innendrucks kann einerseits über die Flüssigkeitsmenge, anderseits in Grenzen (soweit es das Kunstharz zuläßt) auch über die Temperatur jenseits des Siedepunktes der Flüssigkeit erfolgen.

Weil ein bloß mit Kunstharz getränkter Faserstoff meist nicht gasdicht genug ist oder sich nicht leicht zu einem gasdichten Behälter formen läßt, werden für das erfindungsgemäße Verfahren vorzugsweise solche verformbaren Hohlkammern verwendet, die aus einem inneren verschließbaren Behälter (z.B. einem Schlauch) aus einer gasdichten Kunststoffolie und einer Umhüllung aus mit Kunstharz getränktem Faserstoff (z.B. in Form einer Kunstharz-Faserstoff-Röhre) bestehen.

Der Kunstharz-Faserstoff kann vorzugsweise aus einem textilen Flächengebilde (Gewebe, Gewirk, Geflecht) oder Vlies aus Glasfasern bestehen. Es kommen aber auch andere Fasern, wie z.B. Carbonfasern oder Aramidfasern in Betracht. Das Kunstharz kann vorzugsweise ein Epoxidharz oder Polyesterharz sein. Das Kunstharz-Faserstoff-Gebilde kann mit Harz im Rohzustand getränkt sein oder als Prepreg mit bereits vorgehärtetem Harz vorliegen.

Die Erfindung wird nachstehend anhand der Zeichnungen durch ein Ausführungsbeispiel näher erläutert.

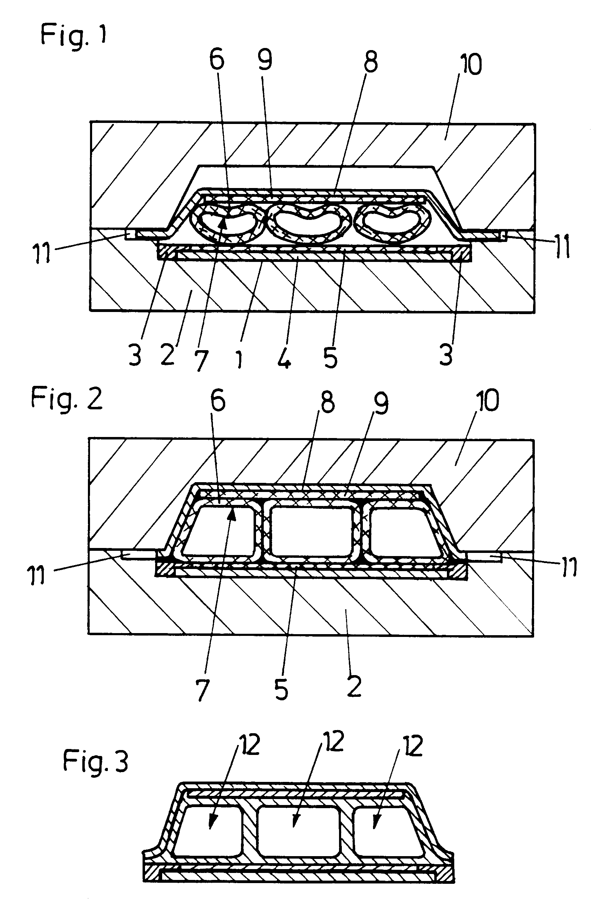

Fig. 1 und 2 veranschaulichen das erfindungsgemäße Verfahren, wobei jeweils Querschnitte der Herstellungsform mit den darin befindlichen Bauteilen des Skis dargestellt sind. Fig. 3 zeigt den Querschnitt eines nach dem erfindungsgemäßen Verfahren hergestellten Skis.

Zur Herstellung eines Hohlskis mit inneren Hohlkörpern aus faserverstärktem Kunststoff (Fig. 3) wird wie üblich eine Form aus zwei Formhälften verwendet.

Wie aus Fig. 1 ersichtlich, werden in die Vertiefung 1 der hier als Unterform 2 ausgebildeten ersten Formhälfte die Bauteile der unteren Baugruppe des Skis, nämlich die Laufsohle 1 (z.B. aus Polyethylen), die Stahlkanten 4 sowie eine Schicht 5, die eine tragende Schicht aus faserverstärktem Kunststoff oder Metall bzw. eine nicht tragende Ausgleichsschicht sein kann, eingelegt. Diese Bauteile 3,4,5 können vor dem Einlegen in die Vertiefung 1 der Unterform 2 bereits miteinander verbunden (verklebt) sein. Auf die Bauteile 3,4,5 der unteren Baugruppe des Skis werden sodann Kunstharz-Faserstoff-Röhren 6 (im dargestellten Fall sind es drei) z.B. aus mit Polyesterharz oder Epoxidharz getränkten Schlauchgeflechten aus Glasfasern aufgelegt, die mit innenliegenden Schläuchen 7 aus gasdichtem Material, z.B. aus Polypropylen, versehen sind. Über die Kunstharz-Faserstoff-Röhren 6 wird sodann noch die Deckfolie 8 aus unverstärktem Kunststoff, z.B. Polyamid, gelegt, die an ihrer Unterseite eine Verstärkungsschicht 9 aus faserverstärktem Kunststoff trägt.

Die Kunstharz-Faserstoff-Röhren 6 mit den innenliegenden Schläuchen 7 können sich über die ganze Länge des Skis erstrecken oder nur über Teilbereiche der Länge, vorzugsweise etwa über die sogenannte Kontaktlänge vom hinteren Ende der Schaufelaufbiegung bis zum vorderen Beginn des leicht aufgebogenen Skiendes. Im Bereich der Schaufel und des aufgebogenen Hinterendes kann zwischen den über die ganze Länge des Skis durchgehenden Schichten (Gurtschichten) 3, 9 eine Vollkörper-Einlage, z.B. aus Holz, Kunststoff, Metall, Faservlies od. dgl. angeordnet sein.

In das Innere der beim dargestellten Ausführungsbeispiel aus Kunstharz-Faserstoff-Röhren 6 und innenliegenden Schläuchen 7 aus Kunststoff bestehenden verformbaren Hohlkammern wird vor dem Einlegen in die Form eine relativ geringe Menge, z.B. 1,5 ccm, einer Flüssigkeit eingeführt, deren Siedepunkt vorzugsweise unter 100° C liegt, z.B. Ethanol (Alkohol). Anschließend werden die Öffnungen der Schläuche 7 gasdicht verschlossen (z.B. verschweißt).

Beim Schließen der Form wird auf die Unterform 2 die zweite Formhälfte, hier die Oberform 10, aufgesetzt, die einen der Seiten- und Oberflächenkontur des Skikörpers entsprechenden Formhohlraum aufweist. Durch entsprechende Ausbildung der Schließflächen bilden sich seitliche Spalte 11, die in den Formhohlraum münden. In diese Spalte kommen beim Schließen der Form die seitlichen Randzonen der Deckfolie 8 zu liegen. Die Spaltstärke ist so bemessen, daß die Randzonen der Deckfolie 8 den Spalt gerade ausfüllen, jedoch im Spalt nicht unverrückbar eingeklemmt sind.

Nunmehr erfolgt durch die beheizbaren Formhälften ein Erwärmen der eingelegten Skibauteile. Bei entsprechendem Ausmaß der Erwärmung erreicht bzw. übersteigt die in den Schläuchen 7 befindliche Flüssigkeit ihren Siedepunkt (78° bei Alkohol) und geht in die gasförmige Phase über, wobei nun der Gasdruck die Schläuche 7 ausdehnt oder entfaltet und gleichzeitig eine Ausdehnung der noch verformbaren Kunstharz-Faserstoff-Röhren 6 erfolgt, bis sich die Deckfolie 8 an die Forminnenwand der Oberform 10 anlegt und ihre Ränder aus den Spalten 11 gezogen werden. Dabei verformen sich auch die Kunstharz-Faserstoff-Röhren 6 entsprechend der Darstellung in Fig. 2. Die Temperatur im Forminneren muß auf die Aushärtetemperatur des Kunst-harzes der Kunstharz-Faserstoff-Röhren 6 sowie der Gurtschichten 4,9 (120° bei Epoxidharz) ansteigen, damit ein Aushärten des Kunstharzes erfolgt. Allfällige Lücken innerhalb der Deckfolie 8 füllen sich mit aus den Bauteilen 4,6,9 austretendem Kunstharz.

Nach dem Entformen erhält man einen Hohlski mit einem Querschnitt, wie in Fig. 3 dargestellt.

Beim Abkühlen kondensiert aus dem im Inneren der nunmehr festen Hohlkammern 12 befindlichen Gas-Luft-Gemisch die ursprünglich eingebrachte Flüssigkeit (z.B. Alkohol) wieder aus. Sie kann durch Anbohren der Hohlkammern 12 entfernt werden oder verbleibt in den Hohlkammern, wobei mit der Zeit die ohnehin geringe Flüssigkeitsmenge auch nach außen diffundieren und/oder von den umliegenden Materialien absorbiert werden kann.

Das erfindungsgemäße Verfahren läßt sich bei Skiern verschiedenster Gattung anwenden, wobei unter Skiern auch Snowboards zu verstehen sind. Das erfindungsgemäße Verfahren läßt sich auch bei der Herstellung von Skibauteilen anwenden, z.B. von Kernbauteilen oder von auf den Ski aufsetzbaren Bauteilen, beispielsweise Dämpfungsplatten. Darüberhinaus kann das erfindungsgemäße Verfahren auch zur Herstellung anderer Gegenstände eingesetzt werden, z.B. von Leichtbauteilen im Flugzeugbau oder Fahrzeugbau, für Schwimmkörper u. dgl.

## Patentansprüche

1. Verfahren zur Herstellung eines Formteils mit mindestens einem Hohlkörper aus faserverstärktem Kunststoff, insbesondere eines Skis oder von Skibauteilen, wobei mindestens eine mit kunstharzgetränktem Faserstoff umhüllte, verformbare Hohlkammer in einer geschlossenen Form durch inneren Gasdruck geformt wird, dadurch gekennzeichnet, daß zur Erzeugung des inneren Gasdruckes in das Innere der verformbaren Hohlkammer (6,7) eine das Innere der Hohlkammer nur teilweise füllende Menge Flüssigkeit eingeführt wird, worauf nach gasdichtem Abschluß der Hohlkammer (6,7) die Flüssigkeit über ihren Siedepunkt erwärmt wird.

2. Verfahren nach Anspruch 1, dadurch gekennzeichnet, daß eine Hohlkammer aus einem inneren verschließbaren Behälter (7) aus einer gasdichten Kunststoffolie und einer Umhüllung (6) aus mit Kunstharz getränktem Faserstoff besteht.

3. Verfahren nach Anspruch 2, dadurch gekennzeichnet, daß eine Hohlkammer aus einer Kunstharz-Faserstoff-Röhre (6) mit einem innen liegenden Schlauch (7) aus gasdichtem Kunststoff besteht.

4. Verfahren nach einem der Ansprüche 1 bis 3, dadurch gekennzeichnet, daß eine Flüssigkeit in das Innere der Hohlkammer (6,7) eingeführt wird, deren Siedepunkt unter 100° C liegt.

5. Verfahren nach einem der Ansprüche 1 bis 4, dadurch gekenn-zeichnet, daß eine Flüssigkeit in das Innere der Hohlkammer (6,7) eingeführt wird, deren Siedepunkt unter der Aushärtetemperatur des Kunstharzes der Kunstharz-Faserstoff-Umhüllung (6) der Hohlkammer (6,7) liegt.
